# EUROPÄISCHE PATENTANMELDUNG

(11) **EP 0 556 532 A1**
(43) Veröffentlichungstag der Anmeldung: **25.08.1993**
(21) Anmeldenummer: 92810121.1
(22) Anmeldetag: 20.02.1992
(51) Int. Cl.: H01M 8/02, H01M 2/22, C04B 37/02

(54) **Elektrisch leitende Verbindung zwischen Metall und Keramik in Hochtemperatur-Brennstoffzellen**

(71) Anmelder: SULZER INNOTEC AG, CH-8401 Winterthur (CH)
(72) Erfinder: Honegger, Kaspar, Dr., CH-8344 Bäretswil (CH)
(74) Vertreter: Trieblnig, Adolf

(57) **Zusammenfassung**

Die elektrisch leitende Verbindung zwischen einem metallischen Stromleiter (1) und einer keramischen Komponente (2) in einer Hochtemperatur-Brennstoffzelle besteht aus einer porösen Zwischenschicht (12). Diese Zwischenschicht wird aus einem pasteartigen Verbindungsmittel, das aus keramischen, elektrisch leitenden Partikeln (120) besteht, deren grössten linearen Abmessungen kleiner als 0,03 mm sind, und durch Sintern hergestellt. Die Zwischenschicht ist stoffschlüssig und beschränkt sich im wesentlichen auf den Kontaktbereich des Stromleiters.

## Beschreibung

Die Erfindung betrifft eine elektrisch leitende Verbindung zwischen metallischem Stromleiter und keramischer Komponente in Hochtemperatur-Brennstoffzellen; sie bezieht sich auch auf eine Hochtemperatur-Brennstoffzelle mit solchen elektrisch leitenden Verbindungen.

Aus der EP-A-0432381 ist eine Bauteilanordnung zur Stromführung für keramische Hochtemperatur-Brennstoffzellen bekannt, bei denen Stromkollektoren in der Luftelektrode (= Sauerstoffelektrode) und in der Gaselektrode (= Brennstoffelektrode) verankert sind. Die Verankerung in der Luftelektrode ist dadurch realisiert, dass das Elektrodenmaterial - eine poröse Schicht aus einem La/Mn-Perowskit - als Verbindungsmittel zwischen dem Feststoffelektrolyten (dotiertes, stabilisiertes Zirkonoxid) und dem Stromkollektor verwendet wird: Der Stromkollektor - in Drahtform oder in Form eines gewellten Bandes - ist fest und elektrisch leitend in die Luftelektrode eingebettet.

Aus der CH-PS-678775 (oder EP-A-0437175) ist eine zentralsymmetrische Brennstoffzellenbatterie mit stapelartiger Anordnung der Zellen (Module) bekannt. Die Gaszuführung erfolgt über einen axialen Kanal und die Luftzuführung über integrierte Wärmetauscher, über welche die Luft von peripheren Einspeisestellen zur Zellenmitte geführt wird, wo sie erst mit der Luftelektrode der elektrochemisch aktiven Platte in Kontakt tritt. Die Luft wird dann radial im Gleichstrom mit dem Gas wieder zur Peripherie des Zellenstapels geführt. Der interne Luftwärmetauscher wird im wesentlichen durch eine metallische Trennwand zwischen Luft- und Gasraum und eine zu dieser Wand und der elektrochemisch aktiven Platte parallelen Luftleitplatte gebildet. Diese Luftleitplatte kann durch einen sogenannten Interkonnektor gebildet werden. Der Interkonnektor bildet zusammen mit der elektrochemisch aktiven Platte eine Einheit: Er besteht aus einer zusammenhängenden Schicht mit zentralen Durchbrüchen für die Luft und mit noppenartigen Verbindungselementen, mit denen er auf der Luftelektrode aufgesintert ist. Er besteht aus einem elektrisch leitenden, keramischen Material, das praktisch die gleiche thermische Ausdehnung wie der Feststoffelektrolyt aufweist. Der Interkonnektor hat auch die Funktion eines Stromkollektors. Für die Weiterleitung des Stroms zwischen Interkonnektor und Trennwand sorgen metallische Leiter (in Draht- oder Blechform).

Es ist Aufgabe der Erfindung, eine elektrisch leitende Verbindung zwischen einem metallischen Stromleiter und einer keramischen Komponente, wie beispielsweise dem Interkonnektor, für Hochtemperatur-Brennstoffzellen zu schaffen, für die folgende Erfordernisse erfüllt sein müssen: eine hohe elektrische Leitfähigkeit und eine gute Oxidationsbeständigkeit. Diese Aufgabe wird durch die Merkmale des Anspruchs 1 erfüllt.

Bei der Materialwahl müssen ferner auch folgende Anforderungen beachtet werden: chemische und mechanische Langzeitstabilität bei Temperaturen zwischen 850 und 1000 °C; insbesondere mechanische Langzeitstabilität hinsichtlich periodischer Temperaturänderungen (Thermozyklen).

Die erfindungsgemässe Sinterverbindung ist eine stoffschlüssige Verbindung. Das Verbindungsmittel - auch Füller oder Binder genannt - hat die Funktion eines Lots. Es besteht aus leitender keramischer Masse und wird in pastenartiger Form verarbeitet. Nach dem Sintern bildet es eine poröse Struktur. Das Verbindungsmittel soll hinsichtlich der Füller/Metall-Paarung stabil, d.h. nicht reaktiv, sein. So soll insbesondere die Leitfähigkeit durch Diffusionseffekte nicht beeinträchtigt werden. Die durch Oxidation gebildete Oxidhaut auf dem metallischen Leiter soll eine gute Leitfähigkeit aufweisen. Der Füller soll "inert" sein: Er soll bei 1000°C in Verbindung mit der Oxidschicht des Metalls stabil bleiben.

Es muss beachtet werden, dass Thermospannungen auftreten und dass dementsprechend eine geeignete geometrische Anordnung gefunden und eine geeignete Materialwahl (evt. Schutzschichten) getroffen werden muss. Die Thermospannung ist minimal bei einer Kombination von Keramik mit hitzebeständigen, ferritischen Legierungen und maximal mit austenitischen Legierungen.

Als inerte Füller kommen folgende Stoffe (keramische Massen) in Frage:
- Metalloxide: A₂O₃, beispielsweise Fe₂O₃ (dotiert mit Ti₄₊);
- Spinelle: AB₂O₄, beispielsweise FeFe₂O₄ (Magnetit);
- Perowskite: ABO₃, beispielsweise LSM = (La,Sr)MnO₃ (auf den A-Gitterplätzen befinden sich entweder La oder Sr; auf den B-Plätzen Mn).

Aus LSM wird vorteilhafterweise auch der Interkonnektor hergestellt; denn LSM zeigt eine praktisch gleiche thermische Ausdehnung wie Zirkonoxid, aus dem der Feststoffelektrolyt der elektrochemisch aktiven Platte besteht.

Beim Perowskit-Füller kommen anstelle des Manganits LSM auch das Chromit (La,Sr)CrO₃ = LSC und die Kobaltite (La,Sr)CoO₃ = LSCo oder (La,Ca)CoO₃ in Frage.

Bei den Spinellen muss beachtet werden, dass in Kombination mit gewissen Metallen (Cr, Al, Mg, Zn) die Leitfähigkeit durch Diffusionsreaktionen drastisch verringert werden kann. Bei solchen Diffusionsreaktionen werden A- und/oder B-Gitterplätze der Spinellstruktur durch die störenden Metalle besetzt.

Der Perowskit-Füller lässt sich folgendermassen herstellen: Ausgangsmaterialien, beispielsweise La₂O₃, SrCO₃ und Co₃O₄ zur Herstellung von LSCo, werden vermischt, gemahlen und gesintert (bei 1200°C für LSCo). Das entstandene Pulver wird sodann gemahlen, sodass die maximale Partikelgrösse kleiner als 15 m ist, und mit einem Öl (beispielsweise Terpineol), das flüchtige und harzartige Komponenten enthält, zu einer homogenen Paste - der "Füllerpaste" - vermischt. (Beim Sintern der Füllerpaste verschwinden die durch das Öl hinzugekommenen Zusätze wieder.)

Es wurden Versuche zum Kontaktwiderstand von Metall/Keramik-Paarungen durchgeführt, wobei der Kontakt durch eine dünne Schicht des Füllers (rund 0,01 mm) vermittelt wurde. Gute Resultate ergaben sich für HS230/LSCo, HS600/LSCo und HS188/LSCo (Kontaktwiderstand für 1 cm² rund 0,02 Ohm). HS230 und HS600 sind Nickelbasislegierungen mit folgenden Zusammensetzungen (in Klammer Gew-%):
HS230: Fe (3), Cr (22), Al (0,3), Si (0,4), Mn (0,5), Mo (2), W (14), Co (5), C (0,1), La (0,02), Ni (Rest).
HS600: Fe (8), Cr (15), Si (0,5), Mn (1), C (0,15), Ni (Rest).

HS188 ist eine Kobaltbasislegierung mit der Zusammensetzung: Fe (3), Ni (22), Cr (22), Si (0,5), Mn (1,25), W (14), C (0,1), La (0,07), Co (Rest).

HS188 und HS230 sind Austenite und weisen eine relativ grosse thermische Ausdehnung auf: der lineare Ausdehnungskoeffizient ist rund 50 % grösser als jener von Zirkonoxid.

Bei Ferriten, bei denen der Ausdehnungskoeffizient näher bei jenem von Zirkonoxid liegt, haben die Versuche für einen Fall ("Aluchrome W") schlechte Kontaktwiderstände ergeben. Der Grund sind Aluminiumoxidschichten, die sich auf der Metalloberfläche ausgebildet haben und die einen grossen elektrischen Widerstand erzeugen.

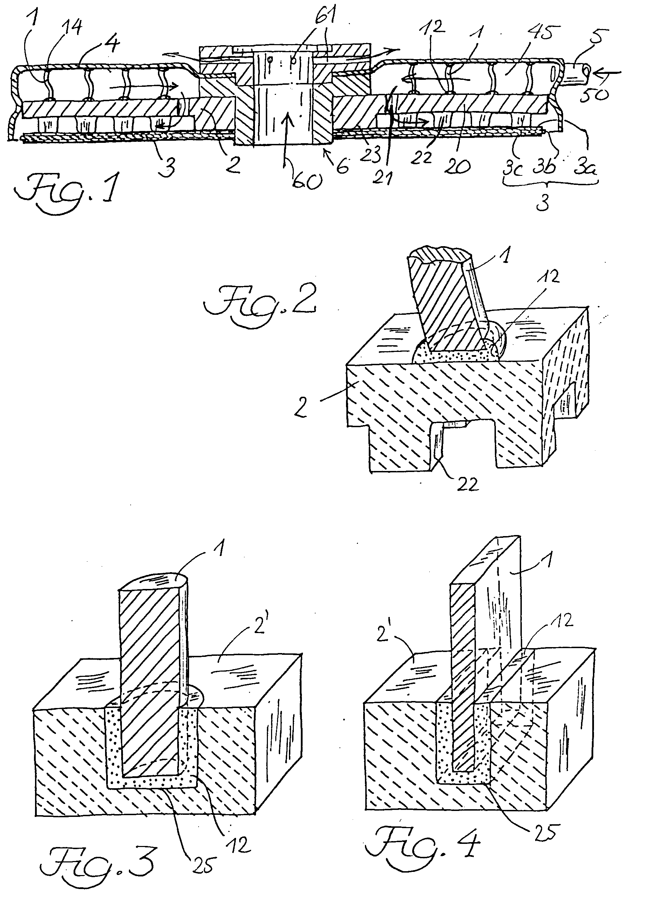

Nachfolgend wird die Erfindung im Zusammenhang mit Zeichnungen näher erläutert. Es zeigen:
- Fig. 1: einen Modul einer bekannten Brennstoffzellen-Batterie,
- Fig. 2: einen Ausschnitt aus einem Interkonnektor mit einer erfindungsgemässen Sinterverbindung zu einem Stromleiter,
- Fig. 3: eine Probe mit einer zweiten erfindungsgemässen Sinterverbindung,
- Fig. 4: eine Variante zur Probe der Fig.3,
- Fig. 5: eine schematische Darstellung eines Schnitts durch die erfindungsgemässe Sinterverbindung,
- Fig. 6: einen Riss durch eine Sinterverbindung und
Die bekannte Brennstoffzelle der Fig.1 zeigt folgende Komponenten: die elektrochemisch aktive Platte 3, den Interkonnektor 2, die Trennwand 4, eine periphere Lufteinspeisestelle 5 (Luft 50) und den zentralen Gaskanal 6 (Gas 60) mit den Verteilleitungen 61. Die elektrochemisch aktive Platte 3 mit der Luftelektrode 3a, dem Elektrolyt 3b und der Gaselektrode 3c ist mit dem aus einem keramischen, elektrisch leitenden Werkstoff gefertigten Interkonnektor 2 zusammengesintert. Der Interkonnektor 2 weist einen Aufbau auf bestehend aus einer zusammenhängenden Schicht 20 mit Durchbrüchen 21 im zentralen Bereich, mit einem zentralen Ring 23 als innern Abschluss und mit noppenartigen Verbindungselementen 22 zwischen der Schicht 20 und der elektrochemisch aktiven Platte 2. Die Schicht 20 hat die Funktion der Luftleitplatte der aus der CH-PS 678775 bekannten Brennstoffzelle. Der Luftraum 45 zwischen Interkonnektor 2 und Trennwand 4 wird durch Stromleiter 1 überbrückt. Auch zwischen der Trennwand 4 und der elektrochemisch aktiven Platte des nicht dargestellten benachbarten Moduls sind elektrische Leiter vorgesehen, die ebenfalls nicht dargestellt sind.

Die an der Stelle 5 eingespeiste Luft 50 strömt im Raum 45 unter Wärmeaufnahme zur Modulmitte und gelangt anschliessend über die Durchbrüche 21 zur elektrochemisch aktiven Platte, wo sie beim Zurückströmen zur Peripherie den Sauerstoff für die elektrochemische Reaktion liefert. Das Gas strömt auf der anderen Seite der elektrochemisch aktiven Platte parallel zur Luft unter teilweiser Umwandlung in die Abgaskomponenten Wasser und Kohlendioxid und vermischt sich schliesslich an der Peripherie mit der Luft, deren Sauerstoff auch nur teilweise verbraucht worden ist.

Der Stromleiter 1 steht mit der Trennwand 4 beispielsweise durch eine bekannte Lot- oder Schweissverbindung 14 in Kontakt. Die Verbindung 12 mit dem Interkonnektor 2 ist in Fig.2 gemäss der Erfindung dargestellt, wobei ein Schnitt durch einen drahtförmigen Stromleiter 1 gezeigt ist. Der Interkonnektor 2 besteht mit Vorteil aus LSM. Auch für das Verbindungsmittel 12 wird vorteilhafterweise eine Paste mit LSM-Partikeln verwendet. Damit beim Aufheizen auf die Betriebstemperatur von 850 bis 1000°C - oder auch beim Abkühlen - keine Risse im Verbindungsmittel 12 entstehen, soll die thermische Ausdehnung des Stromleiters 1 nicht wesentlich anders als jene des LSM sein. So soll der Stromleiter 1 einen linearen Ausdehnungskoeffizienten aufweisen, der sich nicht mehr als um 30 % von jenem der keramischen Komponente 2 unterscheidet. Beispielsweise kann der Stromleiter 1 aus einer hochtemperaturbeständigen, ferritischen Legierung bestehen.

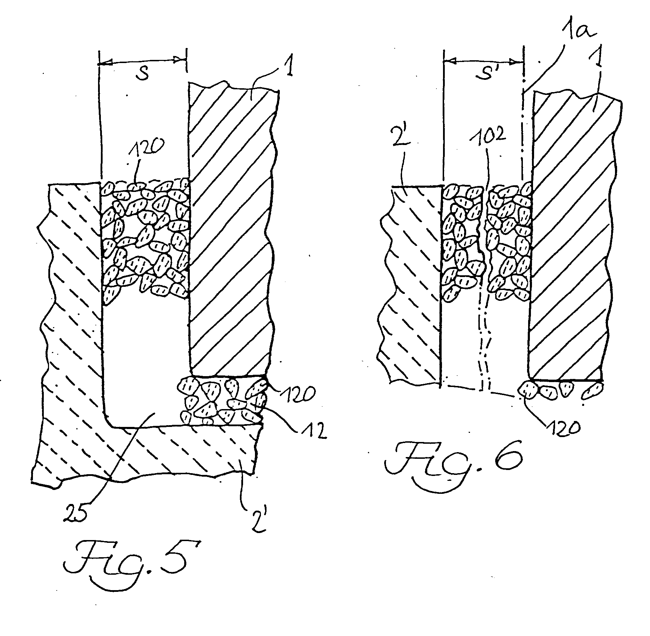

Die Figuren 3 und 4 zeigen in analoger Darstellung wie Fig.2 erfindungsgemässe Verbindungen mit stift- bzw. stegartigem Stromleiter 1, der in eine Vertiefung 25 der keramischen Komponente 2' mittels des Verbindungsmittels 12 eingebettet ist. Die Komponente 2' ist als quaderförmige Probe dargestellt, die beispielsweise Teil eines Interkonnektors wie in Fig.2 ist. Der Querschnitt in Fig.5 zeigt eine schematische Darstellung des porösen Verbindungsmittel 12 mit den Partikeln 120, welches den Raum in der Vertiefung 25 zwischen dem Stromleiter 1 und der keramischen Komponente 2' ausfüllt. Wird für den Stromleiter 1 ein Material gewählt - beispielsweise eine austenitische Legierung -, das eine grössere thermische Ausdehnung als das keramische Material der Komponente 2 hat, so verringert sich beim Aufheizen die Spaltbreite s. Durch diese Spaltverengung werden die Partikel 120 deformiert und stärker zusammengepresst, wodurch sich das elektrische Leitvermögen des Verbindungsmittels 12 verbessert. Nach einem Abkühlen der Brennstoffzelle, bei dem sich die Spaltbreite s wieder erweitert, kann sich ein Riss 102 innerhalb des Verbindungsmittels 12 - siehe Fig.6 - ausbilden. (Mit der strichpunktierten Linie 1a ist in Fig.6 die Oberfläche des Stromleiters 1 bei der Betriebstemperatur der Brennstoffzelle angedeutet; s' ist die zugehörigen Spaltbreite s.) Nach erneutem Aufheizen schliesst sich der Riss 102 und der elektrische Kontakt wird wieder hergestellt. Dank der hohen Betriebstemperatur können die Partikel 120 an der Rissfläche wieder zusammensintern. Wie Experimente gezeigt haben, findet die Rissbildung innerhalb des Verbindungsmittels 12 und nicht an der Grenzfläche zwischen Verbindungsmittel 12 und Stromleiter 1 bzw. keramischer Komponente 2' statt.

## Patentansprüche

1. Elektrisch leitende Verbindung zwischen metallischem Stromleiter (1) und keramischer Komponente (2) in Hochtemperatur-Brennstoffzellen, bestehend aus einer porösen Zwischenschicht (12), die aus einem pasteartigen Verbindungsmittel, das aus keramischen, elektrisch leitenden Partikeln (120) besteht, deren grössten linearen Abmessungen kleiner als 0,03 mm sind, und durch Sintern herstellbar ist, wobei die Zwischenschicht stoffschlüssig ist und sich im wesentlichen auf den Kontaktbereich des Stromleiters beschränkt.

2. Elektrisch leitende Verbindung nach Anspruch 1 mit einem Stromleiter (1), dessen thermische Ausdehnung durch einen linearen Ausdehnungskoeffizienten gegeben ist, der sich nicht mehr als um 30 % von jenem der keramischen Komponente (2) unterscheidet.

3. Elektrisch leitende Verbindung nach Anspruch 2 mit einem Stromleiter (1), der aus einer hochtemperaturbeständigen, ferritischen Legierung besteht.

4. Elektrisch leitende Verbindung nach Anspruch 1 mit einem stift- oder einem stegartigen Stromleiter (1) und einer Vertiefung (25) in der keramischen Komponente (2), in die der Stromleiter mittels des Verbindungsmittels (12) eingebettet ist.

5. Elektrisch leitende Verbindung nach Anspruch 4 mit einem Stromleiter (1), dessen thermische Ausdehnung durch einen linearen Ausdehnungskoeffizienten gegeben ist, der mindestens 30 % grösser als jener der keramischen Komponente (2) ist.

6. Elektrisch leitende Verbindung nach Anspruch 5 mit einem Stromleiter (1), der aus einer hochtemperaturbeständigen, austenitischen Legierung besteht.

7. Elektrisch leitende Verbindung nach einem der Ansprüche 1 bis 6 mit einem Verbindungsmittel (12), dessen Partikel (120) aus einem Metalloxid, einem Stoff mit Spinellstruktur, einem Stoff mit Perowskitstruktur oder einem Gemisch solcher Stoffe bestehen.

8. Elektrisch leitende Verbindung nach Anspruch 7 mit einem Verbindungsmittel (12), dessen Partikel (120) aus LSCo bestehen.

9. Elektrisch leitende Verbindung nach Anspruch 8 und Anspruch 4 mit einem Stromleiter (1), der aus einer Kobaltbasis- oder einer Nickelbasis-Legierung, insbesondere aus HS188 bzw. HS230, besteht.

10. Hochtemperatur-Brennstoffzelle mit planarer Bauweise und mit einem keramischen Interkonnektor (2) auf der Luftelektrode, dadurch gekennzeichnet, dass zwischen Stromkollektoren (1) und dem Interkonnektor elektrisch leitende Verbindungen nach einem der Ansprüche 1 bis 10 bestehen.
